(19) Europäisches Patentamt
European Patent Office
Office européen des brevets

(11) **EP 3 918 706 B1**

(12) **EUROPÄISCHE PATENTSCHRIFT**

(45) Veröffentlichungstag und Bekanntmachung des Hinweises auf die Patenterteilung:
**11.03.2026  Patentblatt 2026/11**

(21) Anmeldenummer: **20700579.4**

(22) Anmeldetag: **13.01.2020**

(51) Internationale Patentklassifikation (IPC):
*H02P 27/08* (2006.01)  *H02P 29/50* (2016.01)
*H02P 23/28* (2016.01)  *H02P 23/00* (2016.01)
*H02P 21/00* (2016.01)  *H02P 6/34* (2016.01)
*H02P 6/10* (2006.01)  *B60L 15/08* (2006.01)
*B60L 15/20* (2006.01)

(52) Gemeinsame Patentklassifikation (CPC):
**H02P 29/50; B60L 15/08; B60L 15/20; H02P 6/10; H02P 6/34; H02P 21/0021; H02P 21/0025; H02P 23/0027; H02P 23/0031; H02P 23/28; H02P 27/085;** B60L 2270/142; B60L 2270/145; Y02T 10/64; Y02T 10/72

(86) Internationale Anmeldenummer:
**PCT/EP2020/050621**

(87) Internationale Veröffentlichungsnummer:
**WO 2020/156782 (06.08.2020 Gazette 2020/32)**

(54) **VERFAHREN ZUR STEUERUNG EINES INVERTERS**

METHOD FOR CONTROLLING AN INVERTER

PROCÉDÉ DE COMMANDE D'UN ONDULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **28.01.2019  DE 102019200992**

(43) Veröffentlichungstag der Anmeldung:
**08.12.2021  Patentblatt 2021/49**

(73) Patentinhaber: **Robert Bosch GmbH**
**70442 Stuttgart (DE)**

(72) Erfinder:
• ZELTWANGER, Thomas
**74379 Ingersheim (DE)**
• BISCHOF, Wolfgang Michael
**71638 Ludwigsburg (DE)**

(56) Entgegenhaltungen:
EP-A1- 3 007 345       WO-A1-2018/181332
DE-A1- 102011 119 644  US-A1- 2009 115 362
US-A1- 2014 084 829    US-A1- 2020 295 696

# EP 3 918 706 B1

## Beschreibung

Die Erfindung betrifft ein Verfahren zur Steuerung eines Inverters, der mit einem Elektromotor verbunden ist, wobei der Betrieb dieser Einheit innerhalb von Störbereichen vermieden wird.

In und an Antriebssystemen z. B. für Elektrofahrzeuge können betriebspunktabhängige Schwingungen, und somit Schallemissionen und auch andere negativ auf das System wirkende Schwingungen, entstehen, welche für Anwender störend oder unangenehm sein können. Diese Schallemissionen und andere störende Schwingungen in allgemeiner Art werden deshalb durch Verfahren zur Reduktion der Schallemissionen und Schwingungen in allgemeiner Art verringert oder vermieden. Andere negative Schwingungen in einem System könnten unter anderem Schwingungen auf den Signalen in einem Signalprozessor, mechanische Schwingungen, elektrische Schwingungen, elektromagnetische Schwingungen usw. sein. Sie wirken sich neben dem Geräusch, auch negativ auf die Bauteilbelastung bzw. die Lebensdauer und die Qualität der Signalverarbeitung aus.

### Stand der Technik

Die Druckschriften DE 10 2011 119644 A1, US 2009/115362 A1, EP 3 007 345 A1, US 2014/084829 A1 offenbaren Ansteuerungen für Inverter, mittels derer die während des Betriebs des Inverters auftretenden elektromagnetischen Störungen minimiert werden.

Solche Schwingungen werden typischerweise durch Dämpfungsmaßnahmen oder Dämmungsmaßnahmen reduziert. Es können auch konstruktive Maßnahmen, die z. B. die Steifigkeit von Aggregaten verändern, eingesetzt werden. Gegebenenfalls werden auch Sollvorgaben modifiziert um ein Störgeräusch zu mindern.

Die WO 2018/181332 A1 offenbart eine Steuervorrichtung für eine rotierende elektrische Maschine, wobei die Schaltfrequenz in Übereinstimmung mit einer Drehzahl einer rotierenden elektrischen Maschine variiert wird. 1

Die Druckschrift DE 10 2014 208 384 beschreibt einen Antriebsstrang sowie ein Verfahren zum Reduzieren eines Zahneingriffgeräusches eines elektrisch antreibbaren Antriebsstrangs mit einem Zahnradgetriebe und einem Elektromotor.

Das Verfahren umfasst die Schritte: Ermitteln eines Betriebszustandes des Antriebsstrangs; Auslesen eines dem ermittelten Betriebszustand zugeordneten Datensatzes aus einem Datenspeicher, und Anpassen eines Drehmomentes des Elektromotors entsprechend dem Datensatz.

Die Aufgabe der Erfindung besteht darin, ein alternatives Verfahren zur Steuerung eines Inverters anzugeben, um die Störungen in bestimmten Störbereichen zu reduzieren oder ganz zu vermeiden.

### Offenbarung der Erfindung

Erfindungsgemäß wird ein Verfahren zur Steuerung eines gemäß Anspruch 1 angegeben.

Vorteilhafte Ausgestaltungen sind Gegenstand der abhängigen Ansprüche sowie der nachfolgenden Beschreibung.

Die Erfindung beruht auf der Erkenntnis, dass eine Vielzahl von Störungen in Form von Schwingungen, Oberflächenschwingungen oder auch elektrischen Schwingungen durch Frequenzen von Seitenbändern modulierter Frequenzen, wie der Modulation der Schaltfrequenz eines Inverters mit der elektrischen Frequenz oder durch Vielfache der elektrischen Frequenz bei bestimmten Schaltfrequenzen, angeregt werden. Oder auch einfach in gewissen Frequenzbändern auftreten. Bei Verwendung eines Inverters mit variabler Schaltfrequenz kann somit ein solcher kritischer Störbereich ggf. vermieden werden und somit die Ursache beseitigt werden.

Das erfindungsgemäße Verfahren zur Steuerung eines Inverters, der mit einem Elektromotor elektrisch verbundenen ist, legt in einem Schritt eine modulierte Spannung für den Inverter fest, die auf einer ersten Schaltfrequenz basiert, um den Elektromotor mit einem Strom zu betreiben, wobei der Strom dann eine elektrische Frequenz aufweist.

Diese elektrische Frequenz wird in einem weiteren Schritt ermittelt und wenn wenn ein Wertepaar aus elektrischer Frequenz und erster Schaltfrequenz oder oder ein Wertepaar aus elektrischer Frequenz und einem Seitenband der ersten Schaltfrequenz, innerhalb mindestens eines definierten Störbereichs liegt, wird die erste Schaltfrequenz, auf der die modulierte Spannung basiert, in eine zweite Schaltfrequenz geändert.

Ein solcher Störbereich kann z. B. in einer, der Anwendung des Verfahrens vorangegangenen, Analyse ermittelt worden sein, oder bei bekannten Zusammenhängen zwischen Systemparametern auch errechnet werden. Solche Störbereiche, die durch die Schaltfrequenzbereiche zusammen mit elektrischen Frequenzbereichen definiert werden können z. B. in Tabellen abgelegt werden. Mit diesem Verfahren wird durch die optimale Nutzung von Inverter Schaltfrequenzen, z. B. die Schallemission verringert. Auch andere Schwingungen die negativ auf das System wirken können verringert oder vermieden werden. Elektrische Schwingungen auf Signalleitungen können z. B. auch negativ in einen der Regelkreise des Antriebes eingreifen.

Gemäß einer weiteren Ausgestaltung der Erfindung wird vorgeschlagen, dass das Seitenband alle Wertepaare aus elektrischer Frequenz und erster Schaltfrequenz umfasst, die die Funktion 1:

$$f_{WPM,}(f_{el}) \;=\; (f_{WPM,0} \pm k_1 {}^* f_{el}, \quad k_1 \in N)$$

erfüllen

Da das Seitenband abhängig von der elektrischen Frequenz ist, kann vorhergesagt werden, wann ein Seitenband innerhalb eines definierten Störbereiches liegen wird. Damit kann schon vorher die Schaltfrequenz geändert werden und somit der Störbereich umgangen werden.

Gemäß einer die Erfindung verbessernden Maßnahme wird vorgeschlagen, dass der definierte Störbereich dadurch gebildet wird, dass ein ganzzahliges Vielfaches der elektrischen Frequenz gleich der ersten Schaltfrequenz ist. Da hierdurch ein Störbereich mathematisch erfasst werden kann, ist es hier möglich den Störbereich zu vermeiden.

Gemäß einer weiteren Ausgestaltung der Erfindung wird vorgeschlagen, dass ein definierter Störbereich durch die Formel 2:

$$f_{WPM} = (k_2 \pm \Delta) {}^* f_{el} \qquad k_2 \in N$$

innerhalb der beiden Grenzgeraden aufgespannt wird. Hier ist der Störbereich ein Bereich $\Delta$ um ein Vielfaches der elektrischen Frequenz herum festgelegt. Wenn Schwingungen von einem System z. B. aus Inverter und Elektromotor mit diesem Störbereich beschrieben werden können, ist es möglich, durch die geeignete Wahl der Schaltfrequenz, bei gegebener elektrischer Frequenz, diesen Bereich zu umgehen und somit Störschwingungen zu vermeiden.

Gemäß einer weiteren Ausgestaltung der Erfindung wird vorgeschlagen, dass der Störbereich durch gespeicherte Wertepaare, aus elektrischer Frequenz und erster Schaltfrequenz, definiert ist. Dies ist notwendig, wenn die Störung nicht einfach mathematisch beschreibbar ist, sondern z. B. aus Vorversuchen ermittelte Bereiche identifizierter Störungen über Zuordnungstabellen gespeichert werden müssen.

Gemäß einer die Erfindung verbessernden Maßnahme wird vorgeschlagen, dass eine Änderung der ersten Schaltfrequenz auf die zweite Schaltfrequenz erfolgt, wenn ein Sensorsignal von einer Komponente einer Einheit der dem Inverter zugeordnet ist, einen gewissen Sollwertbereich verlässt oder einen kritischen Wertebereich erreicht.

Mit dieser Ausgestaltung können auch im Betrieb Störbereiche identifiziert werden und durch Änderung der Schaltfrequenz kann ein Bereich für die Schaltfrequenz identifiziert werden, bei dem keine oder weniger Störungen auftreten.

Gemäß einer die Erfindung verbessernden Maßnahme wird vorgeschlagen, dass eine Änderung der ersten Schaltfrequenz auf die zweite Schaltfrequenz erfolgt, wenn aufgrund von aktuellen Fahrzuständen eines Fahrzeuges, dem der Inverter zugeordnet ist, erwartet wird, dass ein Störbereich im weiteren Fahrbetrieb durchlaufen wird. Dabei kann z. B. durch Vorhersageberechnungen geschätzt werden, ob das Wertepaar, aus elektrischer Frequenz und erster Schaltfrequenz oder das Wertepaar aus elektrischer Frequenz und einem Seitenband der ersten Schaltfrequenz, innerhalb eines der oben definierten Störbereiche liegen wird. Wird z. B. ein Beschleunigungsvorgang identifiziert kann erwartet werden, dass dieser noch eine gewisse Zeit beibehalten wird und die damit verbundenen Änderungen der elektrischen Frequenz abgeschätzt werden. Wenn in diesem Vorhersagebereich ein Störbereich liegt, kann dieser durch geeignete Wahl der Schaltfrequenz ggf. umgangen werden.

Gemäß einer weiteren Ausgestaltung der Erfindung wird vorgeschlagen, dass die zweite Schaltfrequenz gemäß einer Regel aus dem Wertepaar der ersten Schaltfrequenz und der elektrischen Frequenz abgeleitet werden.

Für viele Systeme ist zu erwarten, dass von vornherein abgeschätzt werden kann, wie groß der Störbereich ist, so dass spezifische Regeln aufgestellt werden können, welche Wahl der zweiten Frequenz geeignet ist, aus dem Störbereich herauszukommen.

Gemäß einer weiteren Ausgestaltung der Erfindung wird vorgeschlagen, dass die zweite Schaltfrequenz aus der ersten Schaltfrequenz ermittelt wird, indem die erste Schaltfrequenz um einen vordefinierten Wert erhöht oder vermindert wird. Diese einfache Regel kann auch iterativ verwendet werden, wenn die gewählte zweite Schaltfrequenz wieder in einem Störbereich liegt.

Gemäß der Erfindung wird vorgeschlagen, dass die zweite Schaltfrequenz abhängig von einer zeitlichen Änderung aufeinanderfolgender unterschiedlicher Schaltfrequenzen gewählt wird. Bei der Verwendung von Invertern mit veränderlicher Schaltfrequenz kann die Schaltfrequenz z. B. für einen möglichst energiesparenden Betrieb kontinuierlich geändert werden, so dass eine Folge von Schaltfrequenzen über die Zeit entsteht. Daher kann die Information über die Geschwindigkeit der Änderung der Schaltfrequenzen auch für die Vorhersage eines günstigen Wechsels der Schaltfrequenz benutzt werden.

Gemäß einer weiteren Ausgestaltung der Erfindung wird vorgeschlagen, dass vor der Änderung der erste Schaltfrequenz geprüft wird, ob dass das Wertepaar, aus elektrischer Frequenz und zweiter Schaltfrequenz oder das Wertepaar aus elektrischer Frequenz und einem Seitenband der zweiten Schaltfrequenz, innerhalb eines der oben definierten Störbereiche liegt.

Somit kann zumindest für die bekannten Störbereiche, mit einer einfachen iterativen Strategie, eine Steuerfrequenz außerhalb der Störbereiche ermittelt werden.

Ausführungsbeispiel

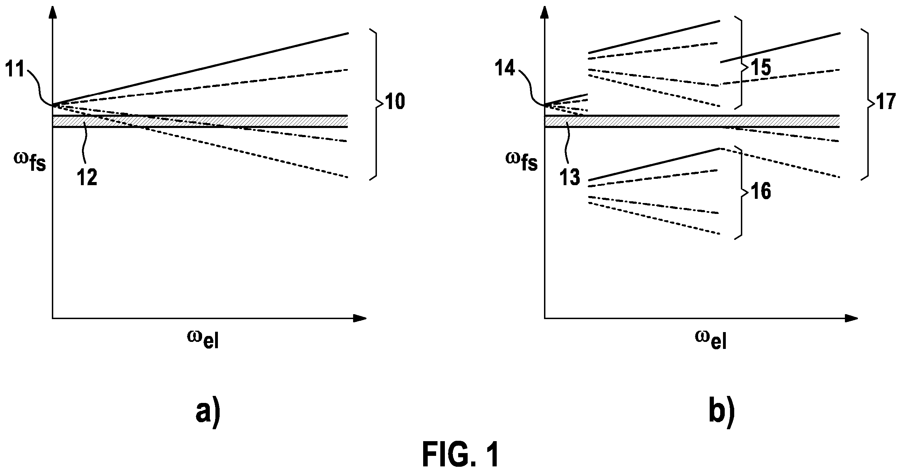

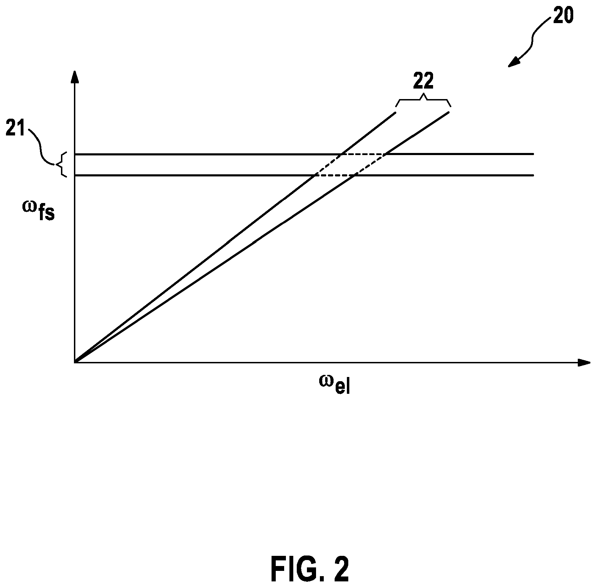

Ausführungsbeispiele der Erfindung sind in den Figuren 1 und 2 dargestellt und werden im Folgenden näher erläutert. Es zeigt:

Figur 1a     ein Beispiel für die Überlappung eines Seitenbands mit einem Störbereich;
Figur 1b     ein Beispiel für die Änderung der Schaltfrequenz wenn ein Seitenband einen Störbereich erreicht;
Figur 2      unterschiedliche Störbereiche;
Figur 3      zeigt den Ablauf eines Verfahrens; und
Figur 4      ein Fahrzeug mit Elektromotor und Inverter.

Die Figur 1a zeigt, ausgehend von der Schaltfrequenz beim Wert der elektrischen Frequenz von Null 11, wie die gezeigten Seitenbänder 10 auseinanderstreben und mit dem Störbereich 12 überlappen. Der Störbereich kann z. B. ein Eigenfrequenzband eines elektrischen Antriebstranges sein. Aufgetragen ist hier die Schaltfrequenz $\omega fs$ über der elektrischen Frequenz $\omega el$. Dabei kann der Verlauf der Seitenbänder mit der Formel 1:

$$f_{WPM,}(f_{el}) \; = \; (f_{WPM,\,0} \pm k_1{}^* \, f_{el}, \quad k_1 \; \Box \; N)$$

beschrieben werden. Darin ist $f_{WPM,}(f_{el})$ das Wertepaar aus elektrischer Frequenz $f_{el}$ und Schaltfrequenz $f_{WPM}$ das auf der Geraden liegt, die durch: $f_{WPM,\,0} \pm k_1{}^* \, f_{el}$ beschrieben wird. Dabei ist $f_{WPM,\,0}$ die Schaltfrequenz 11 selbst und k1 eine ganze Zahl $k_1 \; \Box \; N$.

Die Figur 1b zeigt, wie die Schaltfrequenz $f_{WPM,\,0}$ 14 verändert werden kann, um die Überlappung der Seitenbänder mit dem Störbereich zu vermeiden. Wie zu erkennen ist, kann die Schaltfrequenz erhöht werden, was zu einer Kurvenschar 15 oberhalb des Störbereichs 13 führt oder auch vermindert werden, wie in der Kurvenschar 16 zu erkennen ist. Wenn die relevanten Seitenbänder 17 der ursprünglichen Schaltfrequenz 14 den Störbereich 13 verlassen haben, kann wieder auf die ursprüngliche Schaltfrequenz 14 zurückgesprungen werden.

Mit diesem Verfahren können also Störungen in Form von z. B. Schwingungen oder Schallabstrahlungen oder auch elektrische Störungen, die von den elektrischen Frequenzen bzw. Schaltfrequenzen verursacht werden, vermieden werden.

Die Figur 2 zeigt zusätzlich zu dem aus der Figur 1 bekannten konstanten Störbereich 21 in Form eines Bandes auch einen Störbereich 22 der proportional mit der elektrischen Frequenz steigt und einen Winkel aufspannt. Dieser Störbereich kann durch die Formel 2:

$$f_{WPM} = (k_2 \pm \triangle ) \, {}^* \, f_{el} \qquad k_2 \; \Box \; N$$

beschrieben werden.

Der Faktor $k_2 \; \Box \; N$ stellt eine natürliche Zahl dar und das $\triangle$ bildet den Winkel des Störbereichs. Solche Störbereiche können sich z. B. aus schwingungsfähigen Systemen mit einem vielfachen einer Grundfrequenz ergeben.

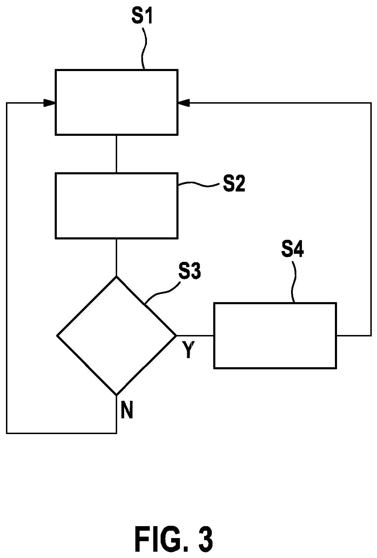

Figur 3 zeigt den Ablauf des Verfahrens. Im Schritt S1 wird eine modulierte, auf einer ersten Schaltfrequenz basierende Spannung für den Inverter festgelegt, die zum Betreiben des Elektromotors mit einem Strom genutzt wird, der eine elektrischen Frequenz aufweist.

Im Schritt S2 wird die elektrischen Frequenz des Stromes des Elektromotors ermittelt.

Es wird in S3 geprüft, ob das Wertepaar aus elektrischer Frequenz und erster Schaltfrequenz oder das Wertepaar aus elektrischer Frequenz und einem Seitenband der ersten Schaltfrequenz, innerhalb mindestens eines definierten Störbereichs liegt.

Wenn die Prüfung in S3 zutrifft, wird im Schritt S4 die ersten Schaltfrequenz, auf der die modulierte Spannung bisher basiert, auf eine zweite Schaltfrequenz geändert. Ansonsten bleibt die erste Schaltfrequenz gleich. In beiden Fällen kann das Verfahren wieder mit S1 starten.

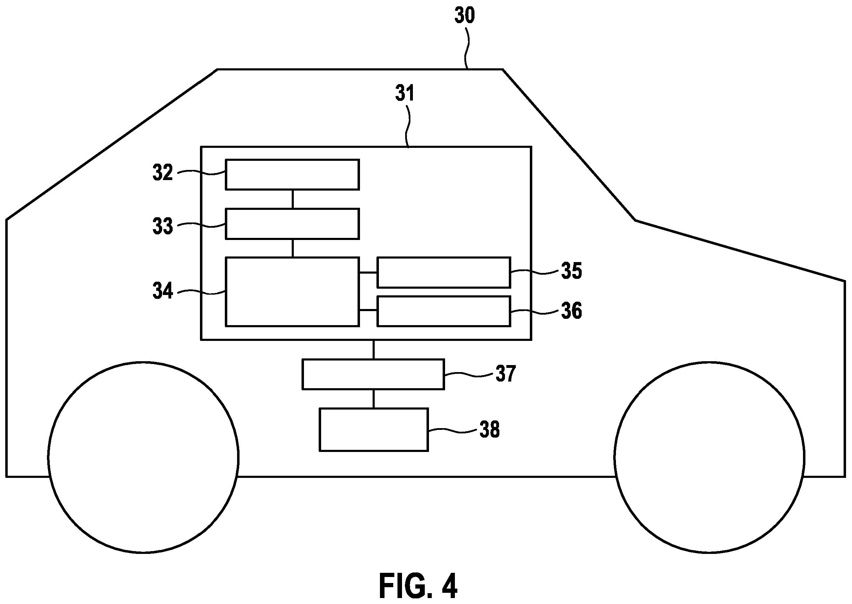

Die Figur 4 zeigt ein Fahrzeug 30 mit einem Elektromotor 38 und einem Inverter 37, zum Betreiben des Elektromotors 38, der mit dem Elektromotor 38 elektrisch verbunden ist. Das Fahrzeug 30 beinhaltet auch eine Steuereinheit 31 für die Steuerung des Inverters 37. Die Steuereinheit 31 weist einen Spannungsmodulator 32 auf, der eingerichtet ist, mittels einer ersten Schaltfrequenz, eine modulierte Spannung für den Inverter 37, zum Betreiben des Elektromotors 38 mit einem Strom einer elektrischen Frequenz bereitzustellen.

Außerdem weist die Steuereinheit 31eine Recheneinheit 33, zum Ermitteln der elektrischen Frequenz auf. Ein Umschalter 34 der Steuereinheit 31ist eingerichtet, die erste Schaltfrequenz für den Spannungsmodulator 32 auf eine zweite Schaltfrequenz zu ändern, wenn das Wertepaar aus elektrischer Frequenz und erster Schaltfrequenz innerhalb mindestens eines definierten Störbereichs liegt.

**Patentansprüche**

1. Verfahren zur Steuerung eines Inverters (37) mit variabler Schaltfrequenz, der mit einem Elektromotor (38) elektrisch verbunden ist, um Störungen in bestimmten Störbereichen (12, 13, 22) zu reduzieren,

   wobei ein Störbereich (12, 13, 22) durch Schaltfrequenzbereiche zusammen mit elektrischen Frequenzbereichen definiert wird,
   mit den Schritten:

   - Festlegen einer, auf einer ersten Schaltfrequenz ($f_{WPM}$, 11, 14) basierenden, modulierten Spannung (S1) für den Inverter (37), zum Betreiben des Elektromotors mit einem Strom, wobei der Strom eine elektrische Frequenz ($f_{el}$) aufweist;
   - Ermitteln der elektrischen Frequenz ($f_{el}$) (S2);
   - Änderung der ersten Schaltfrequenz ($f_{WPM}$, 11, 14) (S4), auf der die modulierte Spannung basiert, auf eine zweite Schaltfrequenz ($f_{WPM}$), wenn das Wertepaar aus elektrischer Frequenz ($f_{el}$) und erster Schaltfrequenz ($f_{WPM}$, 11, 14) oder ein Seitenband (17) der ersten Schaltfrequenz ($f_{WPM}$, 11, 14) mit der elektrischen Frequenz ($f_{el}$) innerhalb mindestens eines Störbereichs (12, 13, 22) liegt (S3), **dadurch gekennzeichnet, dass** die zweite Schaltfrequenz ($f_{WPM}$) abhängig von einer zeitlichen Änderung aufeinanderfolgender unterschiedlicher Schaltfrequenzen ($f_{WPM}$) gewählt wird.

2. Verfahren nach einem der vorangehenden Ansprüche, **dadurch gekennzeichnet, dass** der definierte Störbereich (12, 13, 22) dadurch gebildet wird, dass ein ganzzahliges Vielfaches der elektrischen Frequenz ($f_{el}$) gleich der ersten Schaltfrequenz ($f_{WPM}$, 11, 14) ist.

3. Verfahren nach einem der vorangehenden Ansprüche, **dadurch gekennzeichnet, dass** der definierte Störbereich (22) innerhalb zweier Grenzgeraden aufgespannt wird, die durch die Formeln:

$$(2a) \qquad f_{WPM}\,(f_{el})\ = (k_2 + \Delta) * f_{el} \qquad k_2 \in N, \quad \Delta = konst.$$

und

$$(2b) \qquad f_{WPM}\,(f_{el})\ = (k_2 - \Delta) * f_{el} k_2 \in N, \quad \Delta = konst.$$

festgelegt werden, wobei $f_{el}$ der elektrischen Frequenz entspricht.

4. Verfahren nach einem der vorangehenden Ansprüche, **dadurch gekennzeichnet, dass** der Störbereich (12, 13, 22) durch gespeicherte Wertepaare, aus elektrischer Frequenz ($f_{el}$) und erster Schaltfrequenz ($f_{WPM}$, 11, 14), definiert ist.

5. Verfahren nach einem der vorangehenden Ansprüche, **dadurch gekennzeichnet, dass** eine Änderung der ersten Schaltfrequenz ($f_{WPM}$, 11, 14) auf die zweite Schaltfrequenz erfolgt, wenn ein Sensorsignal, von einer Komponente einer Einheit der der Inverter (37) zugeordnet ist, einen gewissen Sollwertbereich verlässt oder einen kritischen Wertebereich erreicht.

6. Verfahren nach Anspruch 2 bis 4, **dadurch gekennzeichnet, dass** eine Änderung der ersten Schaltfrequenz ($f_{WPM}$, 11, 14) auf die zweite Schaltfrequenz erfolgt, wenn aufgrund von aktuellen Fahrzuständen eines Fahrzeuges, dem der Inverter (37) zugeordnet ist, durch Vorhersageberechnungen erwartet wird, dass das Wertepaar, aus elektrischer Frequenz ($f_{el}$) und erster Schaltfrequenz ($f_{WPM}$, 11, 14) oder ein Seitenband (17) der ersten Schaltfrequenz ($f_{WPM}$, 11, 14) mit der elektrischen Frequenz ($f_{el}$), innerhalb eines in den Ansprüchen 2 bis 4 definierten Störbereichen (12, 13, 22) liegen wird.

7. Verfahren nach einem der vorangehenden Ansprüche, **dadurch gekennzeichnet, dass** die zweite Schaltfrequenz gemäß einer Regel aus dem Wertepaar der ersten Schaltfrequenz ($f_{WPM}$, 11, 14) und der elektrischen Frequenz ($f_{el}$) abgeleitet werden.

8. Verfahren nach einem der Ansprüche 1 bis 6, **dadurch gekennzeichnet, dass** die zweite Schaltfrequenz aus der ersten Schaltfrequenz ($f_{WPM}$, 11, 14) ermittelt wird, indem die erste Schaltfrequenz ($f_{WPM}$, 11, 14) um einen vordefinierten Wert erhöht oder vermindert wird.

9. Verfahren nach einem der Ansprüche 1, 7 oder 8, **dadurch gekennzeichnet, dass** vor der Änderung der ersten Schaltfrequenz ($f_{WPM}$, 11, 14) geprüft wird, ob das Wertepaar, aus elektrischer Frequenz ($f_{el}$) und zweiter Schalt-frequenz oder ein Seitenband der zweiten Schaltfrequenz mit der elektrischen Frequenz ($f_{el}$), innerhalb eines der in den Ansprüchen 2 bis 6 definierten Störbereiche (12, 13, 22) liegt.

**Claims**

1. Method for controlling an inverter (37) that has a variable switching frequency and that is electrically connected to an electric motor (38) in order to reduce interference in certain interference ranges (12, 13, 22),

   wherein an interference range (12, 13, 22) is defined by switching frequency ranges together with electrical frequency ranges,
   having the steps of:

   - stipulating a modulated voltage (S1), based on a first switching frequency ($f_{WPM}$, 11, 14), for the inverter (37) in order to operate the electric motor using a current, wherein the current has an electrical frequency ($f_{el}$);
   - determining the electrical frequency ($f_{el}$) (S2);
   - changing the first switching frequency ($f_{WPM}$, 11, 14) (S4), on which the modulated voltage is based, to a second switching frequency ($f_{WPM}$) when the value pair comprising electrical frequency ($f_{el}$) and first switching frequency ($f_{WPM}$, 11, 14) or a sideband (17) of the first switching frequency ($f_{WPM}$, 11, 14) with the electrical frequency ($f_{el}$) lies within at least one interference range (12, 13, 22) (S3), **characterized in that** the second switching frequency ($f_{WPM}$) is selected depending on a change in successive different switching frequencies ($f_{WPM}$) over time.

2. Method according to one of the preceding claims, **characterized in that** the defined interference range (12, 13, 22) is formed by virtue of an integer multiple of the electrical frequency ($f_{el}$) being equal to the first switching frequency ($f_{WPM}$, 11, 14).

3. Method according to either of the preceding claims, **characterized in that** the defined interference range (22) is defined within two limit lines, which are stipulated by the formulae:

   $$(2a) \qquad f_{WPM}(f_{el}) = (k_2 + \Delta) * f_{el}\ k_2 \in N,\ \Delta = const.$$

   and

   $$(2b) \qquad f_{WPM}(f_{el}) = (k_2 - \Delta) * f_{el}k_2 \in N,\ \Delta = const.$$

   wherein $f_{el}$ corresponds to the electrical frequency.

4. Method according to one of the preceding claims, **characterized in that** the interference range (12, 13, 22) is defined by stored value pairs comprising electrical frequency ($f_{el}$) and first switching frequency ($f_{WPM}$, 11, 14).

5. Method according to one of the preceding claims, **characterized in that** the first switching frequency ($f_{WPM}$, 11, 14) is changed to the second switching frequency when a sensor signal from a component of a unit to which the inverter (37) is assigned leaves a certain target value range or reaches a critical value range.

6. Method according to Claims 2 to 4, **characterized in that** the first switching frequency ($f_{WPM}$, 11, 14) is changed to the second switching frequency when, on the basis of present driving states of a vehicle to which the inverter (37) is assigned, it is expected through predictive calculations that the value pair comprising electrical frequency ($f_{el}$) and first switching frequency ($f_{WPM}$, 11, 14) or a sideband (17) of the first switching frequency ($f_{WPM}$, 11, 14) with the electrical frequency ($f_{el}$) will lie within an interference range (12, 13, 22) defined in Claims 2 to 4.

7. Method according to one of the preceding claims, **characterized in that** the second switching frequency is derived, in accordance with a rule, from the value pair comprising the first switching frequency ($f_{WPM}$, 11, 14) and the electrical frequency ($f_{el}$).

8. Method according to one of Claims 1 to 6, **characterized in that** the second switching frequency is determined from the first switching frequency ($f_{WPM}$, 11, 14) by increasing or decreasing the first switching frequency ($f_{WPM}$, 11, 14) by a predefined value.

9. Method according to one of Claims 1, 7 and 8, **characterized in that**, before the first switching frequency ($f_{WPM}$, 11, 14) is changed, a check is performed to determine whether the value pair comprising electrical frequency ($f_{el}$) and second switching frequency or a sideband of the second switching frequency with the electrical frequency ($f_{el}$) lies within one of the interference ranges (12, 13, 22) defined in Claims 2 to 6.

**Revendications**

1. Procédé de commande d'un onduleur à fréquence de commutation variable (37), qui est connecté électriquement à un moteur électrique (38) afin de réduire les perturbations dans certaines plages de perturbations (12, 13, 22),

   dans lequel une plage de perturbations (12, 13, 22) est définie par des plages de fréquences de commutation conjointement avec des plages de fréquences électriques,
   comprenant les étapes consistant à :

   - définir une tension (S1) modulée pour l'onduleur (37), basée sur une première fréquence de commutation ($f_{WPM}$, 11, 14), pour faire fonctionner le moteur électrique avec un courant, le courant présentant une fréquence électrique ($f_{el}$) ;
   - déterminer la fréquence électrique ($f_{el}$) (S2) ;
   - modifier la première fréquence de commutation ($f_{WPM}$, 11, 14) (S4), sur laquelle se base la tension modulée, en une deuxième fréquence de commutation ($f_{WPM}$), lorsque la paire de valeurs composée de la fréquence électrique ($f_{el}$) et de la première fréquence de commutation ($f_{WPM}$, 11, 14), ou une bande latérale (17) de la première fréquence de commutation ($f_{WPM}$, 11, 14) avec la fréquence électrique ($f_{el}$), se situe à l'intérieur d'au moins une plage de perturbations (12, 13, 22) (S3), **caractérisé en ce que** la deuxième fréquence de commutation ($f_{WPM}$) est choisie en fonction d'une variation temporelle de fréquences de commutation ($f_{WPM}$) différentes successives.

2. Procédé selon l'une des revendications précédentes, **caractérisé en ce que** la plage de perturbations (12, 13, 22) définie est formée par un multiple entier de la fréquence électrique ($f_{el}$) qui est égale à la première fréquence de commutation ($f_{WPM}$, 11, 14).

3. Procédé selon l'une des revendications précédentes, **caractérisé en ce que** la plage de perturbations (22) définie s'étend entre deux lignes de délimitation définies par les formules :

$$(2a) \qquad f_{WPM}(f_{el}) = (k_2 + \Delta) * f_{el} \quad k_2 \in N, \Delta = \text{const.}$$

et

$$(2b) \qquad f_{WPM}(f_{el}) = (k_2 - \Delta) * f_{el} \quad k_2 \in N, \Delta = \text{const.}$$

où $f_{el}$ correspond à la fréquence électrique.

4. Procédé selon l'une des revendications précédentes, **caractérisé en ce que** la plage de perturbations (12, 13, 22) est définie par des paires de valeurs mémorisées, constituées de la fréquence électrique ($f_{el}$) et de la première fréquence de commutation ($f_{WPM}$, 11, 14).

5. Procédé selon l'une des revendications précédentes, **caractérisé en ce que** la première fréquence de commutation ($f_{WPM}$, 11, 14) est modifiée en la deuxième fréquence de commutation lorsqu'un signal de capteur provenant d'un composant d'une unité à laquelle est associé l'onduleur (37) sort d'une plage de valeurs de consigne déterminée ou atteint une plage de valeurs critiques.

6. Procédé selon les revendications 2 à 4, **caractérisé en ce que** la première fréquence de commutation ($f_{WPM}$, 11, 14) est modifiée en la deuxième fréquence de commutation lorsque, sur la base d'états de conduite actuels d'un véhicule auquel est associé l'onduleur (37), il est prévu par des calculs de prévision que la paire de valeurs constituée d'une fréquence électrique ($f_{el}$) et d'une première fréquence de commutation ($f_{WPM}$, 11, 14), ou qu'une bande latérale (17) de la première fréquence de commutation ($f_{WPM}$, 11, 14) avec la fréquence électrique ($f_{el}$), se situent dans une plage de perturbations (12, 13, 22) définie selon les revendications 2 à 4.

7. Procédé selon l'une des revendications précédentes, **caractérisé en ce que** la deuxième fréquence de commutation est dérivée, conformément à une règle, de la paire de valeurs constituée de la première fréquence de commutation ($f_{WPM}$, 11, 14) et de la fréquence électrique ($f_{el}$) .

8. Procédé selon l'une des revendications 1 à 6, **caractérisé en ce que** la deuxième fréquence de commutation est déterminée à partir de la première fréquence de commutation ($f_{WPM}$, 11, 14) en augmentant ou réduisant la première fréquence de commutation ($f_{WPM}$, 11, 14) d'une valeur prédéfinie.

9. Procédé selon l'une des revendications 1, 7 ou 8, **caractérisé en ce qu'**avant la modification de la première fréquence de commutation ($f_{WPM}$, 11, 14), il est vérifié si la paire de valeurs constituée de la fréquence électrique ($f_{el}$) et de la deuxième fréquence de commutation ou si une bande latérale de la deuxième fréquence de commutation avec la fréquence électrique ($f_{el}$) se situe dans l'une des plages de perturbations (12, 13, 22) définies selon les revendications 2 à 6.

FIG. 1

FIG. 2

FIG. 3

**FIG. 4**

EP 3 918 706 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011119644 A1
- US 2009115362 A1
- EP 3007345 A1
- US 2014084829 A1
- WO 2018181332 A1
- DE 102014208384